# FASCICULE DE BREVET EUROPEEN

(11) **EP 4 538 166 B1**
(45) Date de publication et mention de la délivrance du brevet: **05.08.2026**
(21) Numéro de dépôt: 24204419.6
(22) Date de dépôt: 03.10.2024
(51) Int. Cl.: B63G 8/00, B64U 10/70, B64U 10/14, B64U 40/20, B63G 8/22

(54) **ENGIN À CHANGEMENT DE MILIEU AUTONOME OU TÉLÉGUIDÉ**
SELBSTFAHRENDE ODER FERNGESTEUERTE MEDIENWECHSELMASCHINE
AUTONOMOUS OR UNMANNED MEDIUM-CHANGING MACHINE

(30) Priorité: 05.10.2023 FR 2310655
(43) Date de publication de la demande: 16.04.2025
(73) Titulaire: NAVAL Group, 75015 Paris (FR)
(72) Inventeur: MARIE, Antoine, 44340 BOUGUENAIS (FR); LAINE, Christian, 44340 BOUGUENAIS (FR)
(74) Mandataire: Lavoix

(56) Documents cités:
- CN-A- 106 926 654
- CN-A- 112 356 041
- US-A1- 2019 031 339
- US-A1- 2021 001 700
- US-A1- 2021 061 458

## Description

La présente invention concerne un engin à changement de milieu autonome ou téléguidé.

Un tel engin est par exemple un drone. De tels drones sont par exemple connus des documents CN 106 926 654 A, US 2019/031339 A1, US 2021/061458 A1 ou US 2021/001700 A1.

On connait d'une part les drones aériens dont la mise en oeuvre est rapide et aisée pour mener à bien des missions aériennes notamment à longue distance de leur point de départ. De tels drones ne sont pas prévus pour plonger sous l'eau afin de mener des missions sous-marines. On connait d'autre part les drones sous-marins qui permettent de mener des missions sous-marines, telles que la mise en oeuvre de mesures acoustiques sous-marines. Cependant, la mise en oeuvre des drones sous-marin est délicate et nécessite notamment un dispositif mécanique destiné à mettre le drone à l'eau à partir d'un porteur, tel qu'un navire de surface.

L'un des buts de l'invention est de pallier ces inconvénients en proposant un engin autonome ou téléguidé pouvant mener à bien des missions sous-marines sans être mis à l'eau depuis un dispositif mécanique d'un porteur, tel qu'un treuil par exemple.

A cet effet, l'invention concerne un engin à changement de milieu autonome ou téléguidé, comprenant une structure sur laquelle sont montés au moins un ensemble de propulsion, un système de ballastage et au moins une charge utile, l'engin étant étanche, au moins le système de ballastage étant monté de façon réversible sur la structure par au moins un élément de clipsage.

En choisissant un ensemble de propulsion adapté pour déplacer l'engin dans l'air ou sous l'eau, l'engin à changement de milieu selon l'invention permet de bénéficier des avantages liés aux engins aériens et aux engins sous-marins grâce au système de ballastage qui permet de faire plonger l'engin sous l'eau. L'engin peut ainsi décoller d'un point de départ qui peut être à terre ou loin de la cible de l'engin et plonger sous l'eau à l'endroit souhaité sans avoir été mis à l'eau depuis un dispositif mécanique d'un navire de surface. Il peut donc être opéré à partir d'un navire de surface qui ne comporterait pas un tel dispositif mécanique. Le fait que le système de ballastage soit fixé de façon réversible sur la structure de l'engin par au moins un élément de clipsage permet de monter un tel système de ballastage sur un engin aérien existant afin de rendre celui-ci apte à opérer sous l'eau.

L'engin à changement de milieu selon l'invention peut comprendre une ou plusieurs des caractéristiques suivantes, considérées seules ou selon toute combinaison techniquement envisageable :
- le système de ballastage comprend un piston mobile en translation dans un tube, une chambre présentant un volume interne étant définie entre le tube et le piston , le déplacement du piston dans le tube entraînant une modification du volume interne de la chambre de sorte à modifier la flottabilité de l'engin.
- le déplacement du piston est entraîné par une roue montée sur une vis sans fin motorisée.
- la structure comprend au moins une traverse longitudinale, l'élément de clipsage comprenant un corps solidaire du système de ballastage et au moins un crochet fixé de façon réversible sur la traverse longitudinale.
- la structure comprend au moins deux traverses longitudinales sensiblement parallèles, l'élément de clipsage comprenant deux crochets s'étendant à deux extrémités opposées du corps, chaque crochet étant fixé de façon réversible sur l'une desdites traverses longitudinales.
- la charge utile comprend au moins l'un des dispositifs suivants : dispositif d'acquisition d'une signature acoustique sous-marine, dispositif d'acquisition d'une signature électromagnétique sous-marine, dispositif de leurrage sous-marin, dispositif d'émission d'un bruit sous-marin.
- l'ensemble de propulsion comprend au moins une hélice apte à déplacer l'engin dans l'air et sous l'eau.
- la vitesse de rotation de l'hélice est réduite lorsque l'engin est déplacé sous l'eau par rapport à la vitesse de rotation de l'hélice lorsque l'engin est déplacé dans l'air.

D'autres aspects et avantages de l'invention apparaîtront plus clairement à la lecture de la description qui va suivre, donnée uniquement à titre d'exemple non limitatif, et faite en référence aux dessins annexés dans lesquels :
[Fig. 1] - la Fig. 1 est une représentation schématique en perspective d'un engin à changement de milieu selon l'invention,

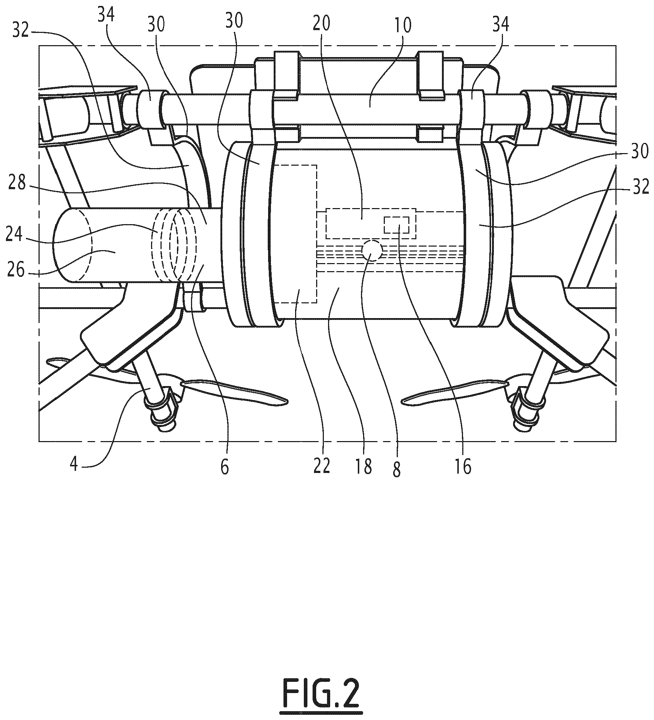

[Fig. 2] - la Fig. 2 est une représentation schématique en perspective d'un détail de la Fig. 1, montrant plus particulièrement le système de ballastage de l'engin, et

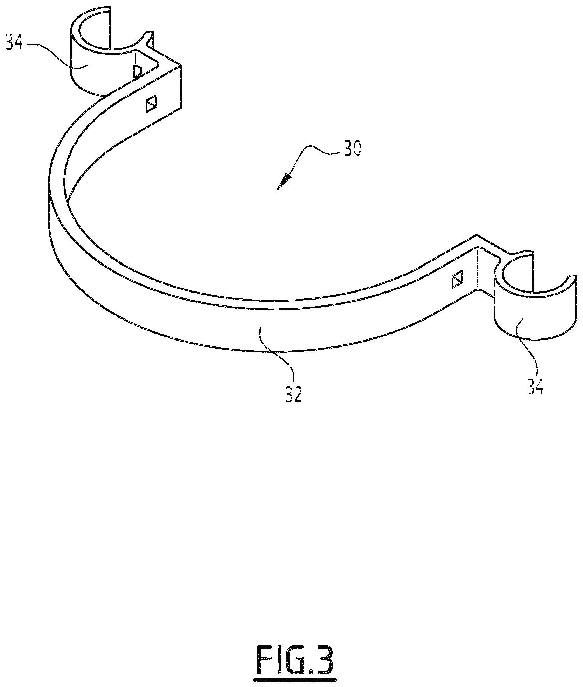

[Fig. 3] - la Fig. 3 est une représentation schématique en perspective d'un élément de clipsage permettant de fixer le système de ballastage à la structure de l'engin.

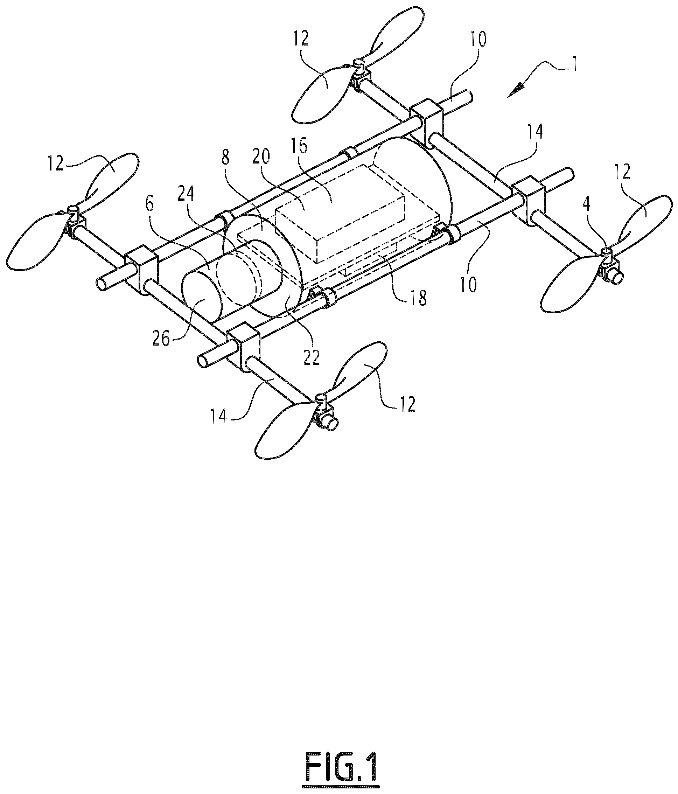

En référence à la Fig. 1, on décrit un engin à changement de milieu 1 autonome ou téléguidé comprenant une structure 2 sur laquelle sont montés au moins un ensemble de propulsion 4, un système de ballastage 6 et au moins une charge utile 8. Un tel engin à changement de milieu est agencé pour pouvoir être déplacé dans l'air et sous l'eau et est donc étanche, notamment à l'eau, par exemple jusqu'à une profondeur d'au moins 30 m. Un tel engin est par exemple un drone aérien et sous-marin piloté de façon autonome, c'est-à-dire sans l'intervention d'un opérateur, ou de façon téléguidée, c'est-à-dire avec l'intervention d'un pilote situé à distance de l'engin 1.

La structure 2 est agencée pour pouvoir supporter les différents éléments constitutifs de l'engin à changement de milieu 1 aussi bien lorsque celui-ci se déplace dans l'air que lorsqu'il se déplace dans l'eau tout en étant relativement légère afin de réduire le dimensionnement de l'ensemble de propulsion 4. La structure 2 comprend par exemple au moins une traverse longitudinale 10 sur laquelle sont fixées les différents éléments constitutifs de l'engin. Selon un mode de réalisation, la structure 2 comprend au moins deux traverses longitudinales 10 sensiblement parallèles s'étendant selon la longueur de l'engin 1 et espacées l'une de l'autre selon la largeur de l'engin, comme représenté sur la Fig. 1.

L'ensemble de propulsion 4 est agencé pour permettre le déplacement autonome ou téléguidé de l'engin à changement de milieu 1 dans l'air et sous l'eau. A cet effet, l'ensemble de propulsion 4 comprend par exemple au moins une hélice 12 montée mobile en rotation sur la structure 2. Selon le mode de réalisation représenté sur la Fig. 1, l'ensemble de propulsion 4 comprend quatre hélices 12 de sorte que l'engin à changement de milieu 1 forme un quadricopter. Les hélices 12 sont par exemple montées sur des traverses transversales 14 de la structure 2, s'étendant chacune au voisinage des extrémités des traverses longitudinales 10 et selon une direction perpendiculaire aux traverses longitudinales 10. La ou les hélices 12 sont agencées pour permettre de déplacer et de diriger l'engin à changement de milieu à la fois dans l'air et sous l'eau. A cet effet, la ou les hélices 12 sont par exemple orientables et aptes à tourner à des vitesses différentes, la vitesse de rotation de la ou des hélices 12 étant inférieure lorsque l'engin à changement de milieu 1 est sous l'eau à la vitesse de rotation de la ou des hélices 12 lorsque l'engin 1 est dans l'air.

La ou les hélices 12 sont pilotées par un dispositif électronique 16 de l'engin à changement de milieu 1, comprenant une batterie d'alimentation 18 et une unité de commande 20. Le dispositif électronique 16 est par exemple placé dans une enceinte 22 fermée hermétiquement et montée sur la structure 2, par exemple entre et sous les traverses longitudinales 10. Les câbles de connexion du dispositif électronique 16 à la ou les hélices 12 sont placés dans des gaines étanches à l'eau. L'enceinte 22 présente par exemple la forme d'un tube fermé à ses deux extrémités et est par exemple montée par clipsage sur la ou les traverses longitudinales 10, comme cela sera décrit plus en détail ultérieurement.

Le système de ballastage 6 est agencé pour modifier la flottabilité de l'engin à changement de milieu 1 afin de permettre à celui-ci de flotter sur l'eau ou de plonger sous l'eau ou de se maintenir à une profondeur donnée en fonction de l'état de remplissage du système de ballastage 6. A cet effet, le système de ballastage 6 comprend par exemple un piston 24 mobile en translation dans un tube 26 et définissant avec le tube une chambre présentant un volume interne 28 variable en fonction de la position du piston 24 dans le tube 26. Le volume interne 28 est par exemple agencé pour être occupé par de l'air ou, en variante par de l'eau. Ainsi, lorsque le volume interne 28 est occupé par de l'air, l'augmentation du volume interne 28 augmente la flottabilité de l'engin à changement de milieu 1. A la surface, le volume interne 18 présente ainsi sa valeur maximale pour que l'engin 1 flotte à la surface. En réduisant le volume interne 28 en déplaçant le piston 24 à l'intérieur du tube 26 de sorte à réduire le volume d'air, la flottabilité de l'engin diminue et il peut plonger sous la surface de l'eau. Lorsque le volume interne 28 est occupé par de l'eau, l'augmentation du volume interne 28 réduit la flottabilité de l'engin à changement de milieu 1. A la surface, le volume interne 18 présente ainsi sa valeur minimale pour que l'engin 1 flotte à la surface. En augmentant le volume interne 28 en déplaçant le piston 24 à l'intérieur du tube 26 de sorte à augmenter le volume d'eau, la flottabilité de l'engin diminue et il peut plonger sous la surface de l'eau. Le pison 24 est par exemple déplacé dans le tube 26 par entraînement du piston 24 par une roue montée sur une vis sans fin motorisée, pilotée par le dispositif électronique 16 de l'engin à changement de milieu 1.

Le système de ballastage 6 est monté sur la structure 2 de façon réversible par au moins un élément de clipsage 30. Plus particulièrement, l'élément de clipsage 30 comprend par exemple un corps 32 solidaire du système de ballastage 6 et au moins un crochet 32 s'étendant à une extrémité du corps 32 et fixé de façon réversible à une traverse longitudinale 10 de la structure 2. Selon un mode de réalisation, l'élément de clipsage 30 comprend deux crochets 34 prévus à chaque extrémité du corps 32 et fixé chacun de façon réversible à une des traverses longitudinales 10 de la structure 2. Le corps 32 présente par exemple une forme incurvée sensiblement complémentaire d'une partie du tube 26 du système de ballastage 6 de sorte que le corps 32 entoure une partie du tube 26 et est fixé par les crochets 34 à ses extrémités aux traverses longitudinales 10 de la structure 2.

Selon un mode de réalisation, le système de ballastage 6 est fixé par deux éléments de clipsage 30 aux traverses longitudinales 10 et l'enceinte 22 recevant le dispositif électronique 16 est par exemple également montée par un ou plusieurs éléments de clipsage 30 sur la ou les traverses longitudinales 10 de la structure 2. Dans la mesure où les éléments de clipsage 30 permette une fixation réversible du système de ballastage 6 et, éventuellement de l'enceinte 22, sur la structure 2, ces éléments peuvent être ajoutés facilement sur un engin existant, tel qu'un drone aérien, qui peut alors devenir également sous-marin. En outre, une telle fixation offre une modularité à l'engin à changement de milieu 1 en permettant l'ajout ou le retrait simple d'éléments sur la structure par clipsage et déclipsage des éléments de clipsage 30.

La charge utile 8 est choisie pour permettre à l'engin à changement de milieu 1 d'effectuer une ou plusieurs missions particulières, par exemple sous l'eau. Ainsi, la charge utile 8 est par exemple choisie parmi au moins un des dispositifs suivants : dispositif d'acquisition d'une signature acoustique sous-marine, dispositif d'acquisition d'une signature électromagnétique sous-marine, dispositif de leurrage sous-marin, dispositif d'émission d'un bruit sous-marin. Il est entendu que cette liste n'est pas exhaustive et qu'elle peut par exemple être complétée par une ou plusieurs charges utiles permettant à l'engin à changement de milieu 1 de remplir des fonctions lorsqu'il est en l'air, une telle charge utile étant par exemple un dispositif d'imagerie ou autre. La ou les charges utiles 8 sont par exemple logées dans l'enceinte 22 afin d'être protégées de l'eau lorsque l'engin à changement de milieu 1 est sous l'eau.

La modularité de l'engin à changement de milieu 1 décrit ci-dessus permet de facilement remplacer la charge utile par une autre, simplement en remplaçant l'enceinte 22 comprenant une charge utile particulière par une autre enceinte 22 comprenant une autre charge utile.

L'engin à changement de milieu 1 peut ainsi être facilement amené dans la zone où il doit effectuer sa mission en se déplaçant dans l'air, en se posant à la surface de l'eau dans la zone de mission puis en plongeant sous l'eau grâce au système de ballastage 6. Une fois la mission accomplie, l'engin à changement de milieu 1 peut remonter à la surface et retourner à sa base en décollant et en se déplaçant à nouveau dans l'air. Ainsi, l'engin à changement de milieu 1 n'a pas besoin d'être mis à l'eau au moyen d'un dispositif mécanique d'un navire de surface plus ou moins proche de la zone de mission.

## Revendications

1. Engin à changement de milieu (1) autonome ou téléguidé, comprenant une structure (2) sur laquelle sont montés au moins un ensemble de propulsion (4), un système de ballastage (6) et au moins une charge utile (8), l'engin (1) étant étanche, **caractérisé en ce que** au
moins le système de ballastage (6) étant monté de façon réversible sur la structure (2) par au moins un élément de clipsage (30).

2. Engin à changement de milieu selon la revendication 1, dans lequel le système de ballastage (6) comprend un piston (24) mobile en translation dans un tube (26), une chambre présentant un volume interne (28) étant définie entre le tube (26) et le piston (24), le déplacement du piston (24) dans le tube (26) entraînant une modification du volume interne (28) de la chambre de sorte à modifier la flottabilité de l'engin (1).

3. Engin à changement de milieu selon la revendication 2, dans lequel le déplacement du piston (24) est entraîné par une roue montée sur une vis sans fin motorisée.

4. Engin à changement de milieu selon l'une quelconque des revendications 1 à 3, dans lequel la structure comprend au moins une traverse longitudinale (10), l'élément de clipsage (30) comprenant un corps (32) solidaire du système de ballastage (6) et au moins un crochet (34) fixé de façon réversible sur la traverse longitudinale (10).

5. Engin à changement de milieu selon la revendication 4, dans lequel la structure (2) comprend au moins deux traverses longitudinales (10) sensiblement parallèles, l'élément de clipsage (30) comprenant deux crochets (34) s'étendant à deux extrémités opposées du corps (32), chaque crochet (34) étant fixé de façon réversible sur l'une desdites traverses longitudinales (10).

6. Engin à changement de milieu selon l'une quelconque des revendications 1 à 5, dans lequel la charge utile (8) comprend au moins l'un des dispositifs suivants : dispositif d'acquisition d'une signature acoustique sous-marine, dispositif d'acquisition d'une signature électromagnétique sous-marine, dispositif de leurrage sous-marin, dispositif d'émission d'un bruit sous-marin.

7. Engin à changement de milieu selon l'une quelconque des revendications 1 à 6, dans lequel l'ensemble de propulsion (4) comprend au moins une hélice (12) apte à déplacer l'engin dans l'air et sous l'eau.

8. Engin à changement de milieu selon la revendication 7, dans lequel la vitesse de rotation de l'hélice (12) est réduite lorsque l'engin est déplacé sous l'eau par rapport à la vitesse de rotation de l'hélice (12) lorsque l'engin est déplacé dans l'air.

## Patentansprüche

1. Autonomes oder ferngesteuertes Mediumwechsel-Fahrzeug (1), umfassend eine Struktur (2), auf der mindestens eine Antriebseinheit (4), ein Ballastsystem (6) und mindestens eine Nutzlast (8) montiert sind, wobei das Fahrzeug (1) dicht ist, **dadurch gekennzeichnet, dass** mindestens das Ballastsystem (6) reversibel auf der Struktur (2) durch mindestens ein Clips-Element (30) montiert ist.

2. Mediumwechsel-Fahrzeug nach Anspruch 1, wobei das Ballastsystem (6) einen Kolben (24) umfasst, der in Translation in einem Rohr (26) beweglich ist, wobei eine Kammer, die ein Innenvolumen (28) aufweist, zwischen dem Rohr (26) und dem Kolben (24) definiert ist, wobei die Verschiebung des Kolbens (24) in dem Rohr (26) eine Änderung des Innenvolumens (28) der Kammer bewirkt, derart, dass der Auftrieb des Fahrzeugs (1) geändert wird.

3. Mediumwechsel-Fahrzeug nach Anspruch 2, wobei die Verschiebung des Kolbens (24) durch ein Rad angetrieben wird, das auf einer motorisierten Schnecke montiert ist.

4. Mediumwechsel-Fahrzeug nach einem beliebigen der Ansprüche 1 bis 3, wobei die Struktur mindestens eine Längstraverse (10) umfasst, wobei das Clips-Element (30) einen Körper (32), der fest mit dem Ballastsystem (6) verbunden ist, und mindestens einen Haken (34), der reversibel an der Längstraverse (10) befestigt ist, umfasst.

5. Mediumwechsel-Fahrzeug nach Anspruch 4, wobei die Struktur (2) mindestens zwei im Wesentlichen parallele Längstraversen (10) umfasst, wobei das Clips-Element (30) zwei Haken (34) umfasst, die sich an zwei entgegengesetzten Enden des Körpers (32) erstrecken, wobei jeder Haken (34) reversibel an einer der genannten Längstraversen (10) befestigt ist.

6. Mediumwechsel-Fahrzeug nach einem beliebigen der Ansprüche 1 bis 5, wobei die Nutzlast (8) mindestens eine der folgenden Vorrichtungen umfasst: Vorrichtung zur Erfassung einer akustischen Unterwassersignatur, Vorrichtung zur Erfassung einer elektromagnetischen Unterwassersignatur, Unterwasser-Täuschvorrichtung, Vorrichtung zur Emission eines Unterwassergeräuschs.

7. Mediumwechsel-Fahrzeug nach einem beliebigen der Ansprüche 1 bis 6, wobei die Antriebseinheit (4) mindestens einen Propeller (12) umfasst, der geeignet ist, das Fahrzeug in der Luft und unter Wasser zu bewegen.

8. Mediumwechsel-Fahrzeug nach Anspruch 7, wobei die Drehgeschwindigkeit des Propellers (12) verringert wird, wenn das Fahrzeug unter Wasser bewegt wird, im Vergleich zu der Drehgeschwindigkeit des Propellers (12), wenn das Fahrzeug in der Luft bewegt wird.

## Claims

1. Autonomous or remotely controlled medium-changing vehicle (1), comprising a structure (2) on which are mounted at least one propulsion assembly (4), a ballasting system (6) and at least one payload (8), the vehicle (1) being watertight, **characterized in that** at least the ballasting system (6) being mounted reversibly on the structure (2) by at least one clip-fastening element (30).

2. Medium-changing vehicle according to claim 1, wherein the ballasting system (6) comprises a piston (24) movable in translation in a tube (26), a chamber having an internal volume (28) being defined between the tube (26) and the piston (24), the displacement of the piston (24) in the tube (26) causing a modification of the internal volume (28) of the chamber so as to modify the buoyancy of the vehicle (1).

3. Medium-changing vehicle according to claim 2, wherein the displacement of the piston (24) is driven by a wheel mounted on a motorized worm screw.

4. Medium-changing vehicle according to any one of claims 1 to 3, wherein the structure comprises at least one longitudinal crossmember (10), the clip-fastening element (30) comprising a body (32) secured to the ballasting system (6) and at least one hook (34) fastened reversibly on the longitudinal crossmember (10).

5. Medium-changing vehicle according to claim 4, wherein the structure (2) comprises at least two substantially parallel longitudinal crossmembers (10), the clip-fastening element (30) comprising two hooks (34) extending at two opposite ends of the body (32), each hook (34) being fastened reversibly on one of said longitudinal crossmembers (10).

6. Medium-changing vehicle according to any one of claims 1 to 5, wherein the payload (8) comprises at least one of the following devices: device for acquiring an underwater acoustic signature, device for acquiring an underwater electromagnetic signature, underwater decoy device, device for emitting an underwater noise.

7. Medium-changing vehicle according to any one of claims 1 to 6, wherein the propulsion assembly (4) comprises at least one propeller (12) able to move the vehicle in the air and under water.

8. Medium-changing vehicle according to claim 7, wherein the rotation speed of the propeller (12) is reduced when the vehicle is moved under water relative to the rotation speed of the propeller (12) when the vehicle is moved in the air.
